# EUROPÄISCHE PATENTANMELDUNG

(11) **EP 1 775 183 A2**
(43) Veröffentlichungstag der Anmeldung: **18.04.2007**
(21) Anmeldenummer: 06121029.0
(22) Anmeldetag: 21.09.2006
(51) Int. Cl.: B60R 22/46

(54) **Gurtstraffer für ein Kraftfahrzeug**

(30) Priorität: 17.10.2005 DE 102005050300
(71) Anmelder: Takata-Petri AG, 63743 Aschaffenburg (DE)
(72) Erfinder: Pechhold, Christoph, 89155 Erbach (DE); Hofer, Robert, 73312 Geislingen (DE); Maunz, Andreas, 89079 Ulm-Einsingen (DE); Fleischmann, Robert, 89233 Neu-Ulm (DE)
(74) Vertreter: Baumgärtel, Gunnar

(57) **Zusammenfassung**

Die Erfindung betrifft einen Gurtstraffer (1) für ein Kraftfahrzeug, mit einer drehbar um eine Drehachse (D) gelagerten Gurtrolle, die zum Aufwickeln eines Sicherheitsgurtes eines Kraftfahrzeuges dient, einer drehfest mit der Gurtrolle verbindbaren Welleneinheit (2), einem längs erstreckten, flexiblen Element (7), das einen ersten Bereich (10b) aufweist, der um eine Hülse (4) der Welleneinheit (2) gewickelt ist, und einen von der Hülse (4) abstehenden zweiten Bereich (10a) aufweist, der mit dem ersten Bereich (10b) verbunden ist, und einer Bewegungserzeugungsvorrichtung, die im Gefahrenfalle eine Zugkraft bereitstellt, die zum Straffen des Sicherheitsgurtes an dem zweiten Bereich (10a) des längs erstreckten Elementes (7) angreift, wobei das längs erstreckte Element (7) derart mit der Welleneinheit (2) zusammenwirkt, dass sich die Welleneinheit (2) zum Straffen des Sicherheitsgurtes in einer ersten Richtung (R) dreht, wenn der erste Bereich (10b) des längs erstreckten Elementes (7) durch die am zweiten Bereich (10a) angreifende Zugkraft von der Hülse (4) der Welleneinheit (2) abwickelt wird, wobei erfindungsgemäß der erste Bereich (10b) des längs erstreckten Elementes (7) mit einem Teilabschnitt über eine durch Krafteinwirkung lösbare Verbindung (11a, 11b) derart an einem nicht gemeinsam mit der Welleneinheit (2) drehbaren Teil festgelegt ist, dass der erste Bereich (10b) des längs erstreckten Elementes (7) durch die am zweiten Bereich (10a) angreifende Zugkraft gegen die Hülse (4) der Welleneinheit (2) gedrückt wird, und dass nach einem Lösen der Verbindung der erste Bereich (10b) des längs erstreckten Elementes (7) entlang der ersten Richtung (R) von der Hülse (4) der Welleneinheit (2) abwickelbar ist, wobei die Welleneinheit (2) zum Straffen des Sicherheitsgurtes entlang der ersten Richtung (R) gedreht wird.

## Beschreibung

Die Erfindung betrifft einen Gurtstraffer für ein Kraftfahrzeug nach dem Oberbegriff des Anspruchs 1.

Derartige Gurtstraffer dienen zum Straffen von Sicherheitsgurten von Kraftfahrzeugen im Falle einer gefährlichen Situation, beispielsweise einer Kollision mit einem anderen Kraftfahrzeug.

Bekannte Gurtstraffer weisen eine drehbar um eine Drehachse gelagerte Gurtrolle auf, die zum Aufwickeln des Sicherheitsgurtes dient, sowie eine mit der Gurtrolle verbundene Welleneinheit, die derart mit der Gurtrolle verbindbar ist, dass eine Drehbewegung der Welleneinheit auf die Gurtrolle übertragbar ist. Über die Welleneinheit kann die Gurtrolle also angetrieben, d.h., gedreht werden. Hierzu ist ein längs erstrecktes, flexibles Element vorgesehen, das einerseits einen ersten Bereich aufweist, der um die Welleneinheit gewickelt ist, und andererseits einen von der Welleneinheit abstehenden zweiten Bereich aufweist, der mit dem ersten Bereich verbunden ist. Das längs erstreckte Element wirkt derart mit der Welleneinheit zusammen, dass diese zum Straffen des Sicherheitsgurtes in einer ersten Richtung gedreht wird, wenn der erste Bereich des längs erstreckten Elementes durch eine am zweiten Bereich angreifende Zugkraft von der Welleneinheit abgewickelt wird. Diese Zugkraft wird im Gefahrenfalle durch eine Bewegungserzeugungsvorrichtung bereitgestellt, bei der es sich beispielsweise um eine pyrotechnische Bewegungserzeugungsvorrichtung wie z.B. einen Gasgenerator handeln kann.

Der Erfindung liegt das Problem zugrunde, einen Gurtstraffer der eingangs genannten Art dahingehend weiterzubilden, dass ein kostengünstiger und kleinbauender Gurtstraffer geschaffen wird.

Das erfindungsgemäße Problem wird gelöst durch einen Gurtstraffer mit den Merkmalen des Anspruchs 1.

Danach ist vorgesehen, dass der erste Bereich des längs erstreckten Elementes mit einem Teilabschnitt über eine durch eine Krafteinwirkung lösbare Verbindung derart an einem nicht gemeinsam mit der Welleneinheit drehbaren Teil festgelegt ist, dass der erste Bereich des längs erstreckten Elementes durch die am zweiten Bereich wirkende Zugkraft (quer zur ersten Richtung) gegen die Welleneinheit gepresst wird, und dass nach einem Lösen der Verbindung der erste Bereich des längs erstreckten Elementes entlang der ersten Richtung von der Welleneinheit abwickelbar ist, wobei die Welleneinheit zum Straffen des Sicherheitsgurtes entlang der ersten Richtung gedreht wird.

Dies löst das erfindungsgemäße Problem, da die durch die Welleneinheit und das längs erstreckte Element gebildete Kupplung einen geringen Raumbedarf aufweist und zudem aufgrund der geringen Bauteilzahl und der daraus resultierenden einfachen Montage eine Kostenersparnis ermöglicht. Aufgrund des Würgeprinzips (das längs erstreckte Element zieht sich um die Welleneinheit zusammen) besteht der weitere Vorteil, dass bei einem solchen Einkupplungsvorgang ein relativ großflächiger Kontakt zwischen dem längs erstreckten Element und der Welleneinheit hergestellt wird, so dass die Gefahr, dass beim Einkupplungsvorgang Material von der Welleneinheit oder dem längs erstreckten Element durch Reibung zwischen diesen Komponenten abgetragen wird, gering ist.

Die Welleneinheit weist zumindest ein Wellenelement auf, das drehfest mit der Gurtrolle verbunden ist. Die Welleneinheit kann in Form eines einteiligen Wellenelementes vorliegen, dass zusammen mit der mit dem Wellenelement verbundenen Gurtrolle gedreht wird, wenn das längs erstreckte Element, das sich in Folge der am zweiten Bereich des längs erstreckten Elementes angreifenden Zugkraft um das Wellenelement zusammengezogen hat, nach dem Lösen der Verbindung auf Grund der Zugkraft von dem Wellenelement abgewickelt wird. Unter einem einteiligen Wellenelement wird hierbei ein Wellenelement verstanden, dessen Bestandteile sich zusammen mit der Gurtrolle drehen.

Alternativ kann die Welleneinheit ein Wellenelement in Form eines mit der Drehachse fluchtenden Wellenkernes aufweisen, der drehfest mit der Gurtrolle verbunden ist sowie eine drehbar auf dem Wellenkern gelagerte Hülse, die drehfest mit dem Wellenkern verbunden wird, wenn das längs erstreckte Element in Folge der Zugkraft quer zur ersten Richtung gegen die Hülse drückt, wobei nach einem Lösen der Verbindung das längs erstreckte Element derart fest um die Hülse gewickelt ist, dass die Hülse zusammen mit dem Wellenkern entlang der ersten Richtung gedreht wird, wenn das längs erstreckte Element von der Hülse der Welleneinheit abgewickelt wird.

Vor dem Angreifen der Zugkraft am zweiten Bereich des längs erstreckten Elementes ist das längs erstreckte Element mit Spiel um die Welleneinheit gewickelt, d.h., bei einer Welleneinheit in Form eines einteiligen Wellenelementes ist das längs erstreckte Element anfänglich derart um das Wellenelement gewickelt, dass eine Drehung des Wellenelementes nicht beeinträchtigt wird. Bei einer Welleneinheit mit einem Wellenkern und einer darauf drehbar gelagerten Hülse, ist das längs erstreckte Element vor dem Angreifen der Zugkraft am zweiten Bereich des längs erstreckten Elementes derart um die Hülse gewickelt, dass diese eine Drehbewegung des Wellenkernes um seine Drehachse nicht behindert.

Bevorzugt ist die Verbindung derart ausgebildet, dass sie durch die Zugkraft gelöst wird, wenn diese einen vorbestimmbaren Schwellenwert übersteigt. Es ist hierbei denkbar, die Verbindung zerstörungsfrei mittels der Zugkraft zu lösen oder aber die Verbindung mittels der Zugkraft derart zu durchtrennen, dass diese dabei zerstört wird. Vorzugsweise weist die Verbindung in diesem Falle zumindest eine Sollbruchstelle auf, entlang derer sie durchtrennbar ist.

Vorzugsweise wird der erste Bereich des längs erstreckten Elementes durch die am zweiten Bereich angreifende Zugkraft quer zur ersten Richtung gegen die Welleneinheit gedrückt, d.h., entlang einer jeweils senkrecht auf der Drehachse stehenden Richtung.

In einem bevorzugten Ausführungsbeispiel der Erfindung ist vorgesehen, dass die Welleneinheit aus zumindest dem einen Wellenkern und die den Wellenkern entlang der ersten Richtung umgreifende Hülse gebildet ist, die drehbar auf den Wellenkern aufgeschoben ist.

Vorzugsweise ist die Gurtrolle über den Wellenkern drehbar gelagert, d.h., der Wellenkern ist drehfest mit der Gurtrolle verbunden und um eine Drehachse drehbar gelagert, wobei bevorzugt der Wellenkern mit der Drehachse fluchtet. In einer bevorzugten Variante der Erfindung ist die Hülse quer zur ersten Richtung zwischen dem Wellenkern und dem längs erstreckten Element angeordnet. D.h., der erste Bereich des längs erstreckten Elementes wird um die den Wellenkern umgebende Hülse gewickelt.

Bevorzugt ist die Hülse der Welleneinheit hierbei derart ausgebildet, dass sie drehfest mit dem Wellenkern der Hülse verbindbar ist, wenn die im Gefahrenfalle durch die Bewegungserzeugungsvorrichtung erzeugte Zugkraft den ersten Bereich des längs erstreckten Elementes quer zur ersten Richtung gegen die Hülse der Welleneinheit drückt. Oder anders gesagt, die Hülse fungiert als ein Zwischenelement, über das der erste Bereich des längs erstreckten Elementes gegen den Wellenkern gedrückt wird. Dadurch, dass der erste Bereich des längs erstreckten Elementes quer zur ersten Richtung gegen die Hülse und diese quer zur ersten Richtung gegen den Wellenkern drückt, wird der Wellenkern beim Abwickeln des ersten Bereiches des längs erstreckten Elementes in der ersten Richtung (durch Einwirken der Zugkraft auf den zweiten Bereich) in Drehung versetzt.

In einer alternativen Variante der Erfindung ist die Welleneinheit als das einteilige, mit der Gurtrolle drehfest verbundene Wellenelement ausgebildet, das vorzugsweise mit der Drehachse fluchtet, wobei bevorzugt das längs erstreckte Element direkt um das Wellenelement gewickelt ist und drehfest mit dem einteiligen Wellenelement verbunden wird, d.h., sich eng um das Wellenelement legt, wenn die im Gefahrenfalle durch die Bewegungserzeugungsvorrichtung erzeugte Zugkraft am ersten Bereich des längs erstreckten Elementes angreift.

Vorzugsweise ist die Hülse entlang der ersten Richtung nicht in sich geschlossen (ringförmig) ausgebildet, sondern geschlitzt, d.h., die Hülse weist einen entlang der Drehachse verlaufenden Schlitz auf, der bewirkt, dass die Hülse (zur Herstellung einer drehfesten Verbindung zwischen Hülse und Wellenkern) quer zur ersten Richtung leichter deformierbar ist.

In einer Variante der Erfindung ist vorgesehen, dass die Verbindung durch zumindest ein Verbindungselement gebildet ist, das an der Hülse der Welleneinheit befestigt ist und diese mit dem nicht mit der Welleneinheit drehbaren Teil des Gurtstraffers verbindet, wobei bevorzugt das Verbindungselement einstückig an die Hülse der Welleneinheit angeformt ist.

In einer alternativen Variante der Erfindung ist das zumindest eine, die Verbindung bildende Verbindungselement an einem Bereich des längs erstreckten Elementes befestigt, der um die Welleneinheit gewickelt ist, d.h., am ersten Bereich des längs erstreckten Elementes. Hierbei ist es vorteilhaft, das Verbindungselement mit einem Abschnitt des ersten Bereiches zu verbinden, der beim Abwickeln des ersten Bereiches von der Welleneinheit möglichst lange an der Welleneinheit verbleibt. Auch hier ist bevorzugt das zumindest eine Verbindungselement einstückig an den ersten Bereich angeformt.

In einer Variante der Erfindung weist die Verbindung ein weiteres Verbindungselement auf, das bevorzugt mit dem zumindest einen Verbindungselement fluchtet.

In einer bevorzugten Ausführungsform der Erfindung ist der zweite Bereich des längs erstreckten Elementes, der entlang der ersten Richtung von der Welleneinheit absteht, als eine Schlaufe ausgebildet, die ein beliebige Form aufweisen kann. Diese kann dadurch erzeugt werden, indem das längs erstreckte Element vor dem Aufwickeln auf die Hülse der Welleneinheit (oder alternativ auf die Welleneinheit in Form des einteiligen Wellenelementes), zu einer Schlaufe gelegt wird, so dass ein erster und ein zweiter freier Endabschnitt des längs erstreckten Elementes aneinander anliegen und über einen mittleren Abschnitt des längs erstreckten Elementes miteinander verbunden sind, der den zweiten Bereich des längs erstreckten Elementes bildet. Hierbei ist der erste Bereich vorzugsweise einstückig mit dem ersten Bereich verbunden.

Bevorzugt ist der erste Bereich des längs erstreckten Elementes derart um die Welleneinheit gewickelt, dass sowohl der erste als auch der zweite Endabschnitt die Welleneinheit im Wesentlichen zumindest zweimal vollständig umlaufen. Der von dem ersten bzw. zweiten Endabschnitt umlaufene Winkel liegt vorzugsweise im Bereich von 720° bis 900°. Bei einem streifenförmig ausgebildeten längs erstreckten Element liegen die beiden Endabschnitte hierbei quer zur ersten Richtung übereinander.

In einer bevorzugten Variante der Erfindung ist der erste Bereich des längs erstreckten Elementes an der Hülse festlegbar. Hierzu weist die Hülse zumindest eine dem Wellenkern abgewandte Ausnehmung auf, die sich nutartig entlang der Drehachse erstrecken kann, wobei bevorzugt der erste Bereich des längs erstreckten Elementes zum Festlegen des längs erstreckten Elementes an der Hülse mit zumindest einem freien Ende in die zumindest eine Ausnehmung der Hülse eingreift. Hierbei kann beispielsweise jeweils ein freies Ende des ersten und des zweiten Endabschnittes des längs erstreckten Elementes zum Eingreifen in die Ausnehmung der Hülse geeignet abgewinkelt sein.

In einer bevorzugten Variante der Erfindung ist vorgesehen, dass das längs erstreckte Element flächig, streifenförmig ausgebildet ist. Weiterhin ist bevorzugt das längs erstreckte Element aus einem Metall gefertigt, d.h., es handelt sich bei dem längs erstreckten Element also bevorzugt um ein flaches Metallband.

In einer weiteren Variante der Erfindung umgibt der zweite Bereich des längs erstreckten Elementes ein mit Druck beaufschlagbares Volumen derart, dass ein Beaufschlagen des Volumens mit Druck mittels der Bewegungserzeugungsvorrichtung die Zugkraft erzeugt, die den ersten Bereich von der Welleneinheit abwickelt. Die Bewegungserzeugungs-vorrichtung kann als ein Gasgenerator ausgebildet sein, der im Gefahrenfalle ein Gas freisetzt, dessen Gasdruck die zum Abwickeln des ersten Bereiches des längs erstreckten Elementes benötigte Zugkraft bereitstellt. Selbstverständlich kann sich die Zugkraft, die durch die Bewegungserzeugungsvorrichtung bereitgestellt wird, aus mehreren einzelnen Zugkräften zusammensetzen, die über den zweiten Bereich in den ersten Bereich, d.h., den auf der Welleneinheit aufgewickelten Bereich des längs erstreckten Elementes eingeleitet werden.

Vorzugsweise weist der erfindungsgemäße Gurtstraffer eine erste und zweite quer zur Drehachse orientierte Gehäusewand auf, wobei die erste und die zweite Gehäusewand entlang der Drehachse einander gegenüberliegen und im Wesentlichen parallel zueinander verlaufen.

Bevorzugt dienen die beiden Gehäusewände zusammen mit dem zweiten Bereich des längs erstreckten Elementes zum Einschließen des mit Druck beaufschlagbaren Volumens des Gurtstraffers.

Weiterhin wird bevorzugt der nicht gemeinsam mit der Welleneinheit drehbare Teil des Gurtstraffers, mit dem die Verbindung verbunden ist, durch die erste und/oder zweite Gehäusewand gebildet.

Die dargestellten Merkmale und Vorteile der Erfindung sollen anhand der nachfolgenden Figurenbeschreibungen von Ausführungsbeispielen verdeutlicht werden. Es zeigen:
- Figur 1: eine schematische, ausschnitthafte Schnittansicht eines erfindungsgemäßen Gurtstraffers,
- Figur 2: eine weitere ausschnitthafte, schematische Schnittansicht eines Gurtstraffers, der in der Figur 1 gezeigten Art, und
- Figur 2a-d: eine Folge von schematischen Schnittansichten des in der Figur 1 bzw. 2 gezeigten Gurtstraffers bei einem Einkupplungsvorgang.

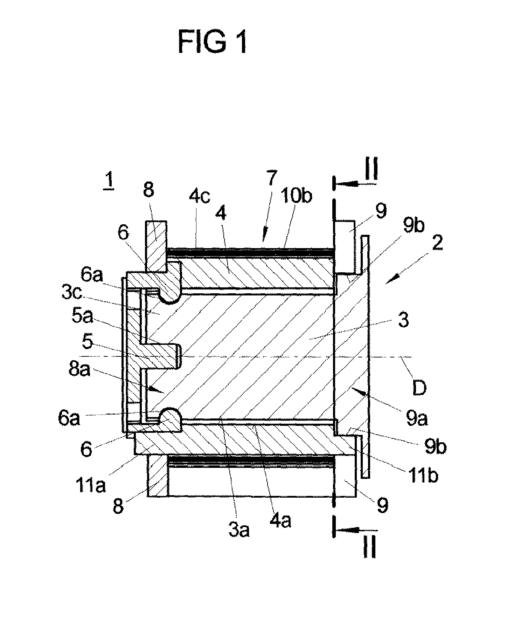

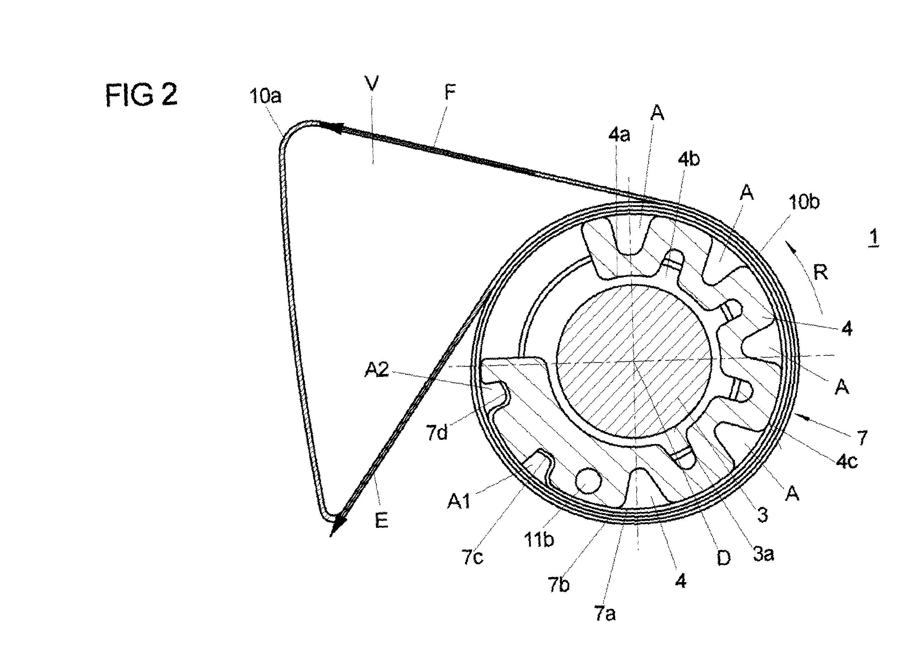

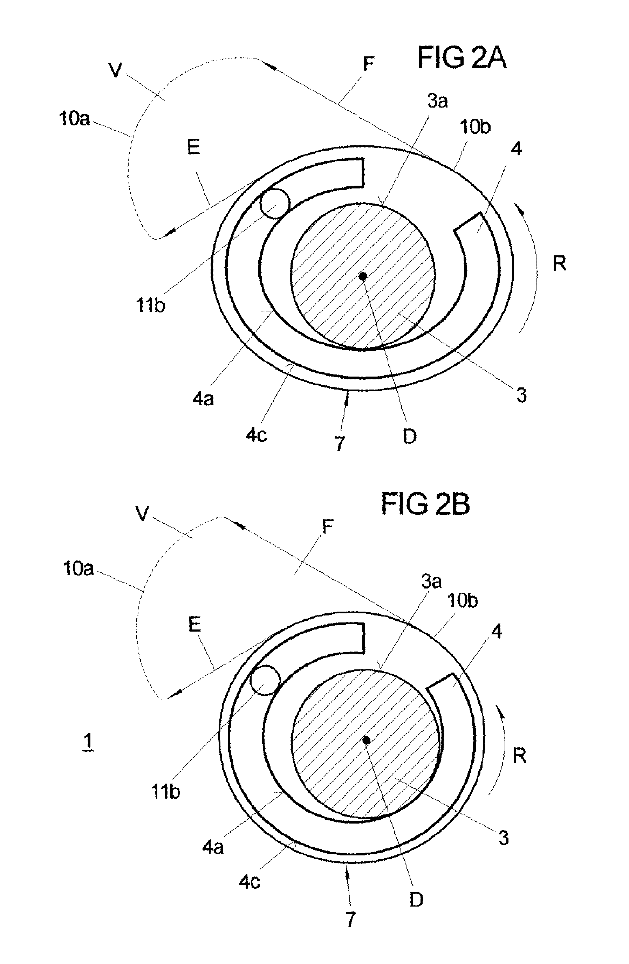

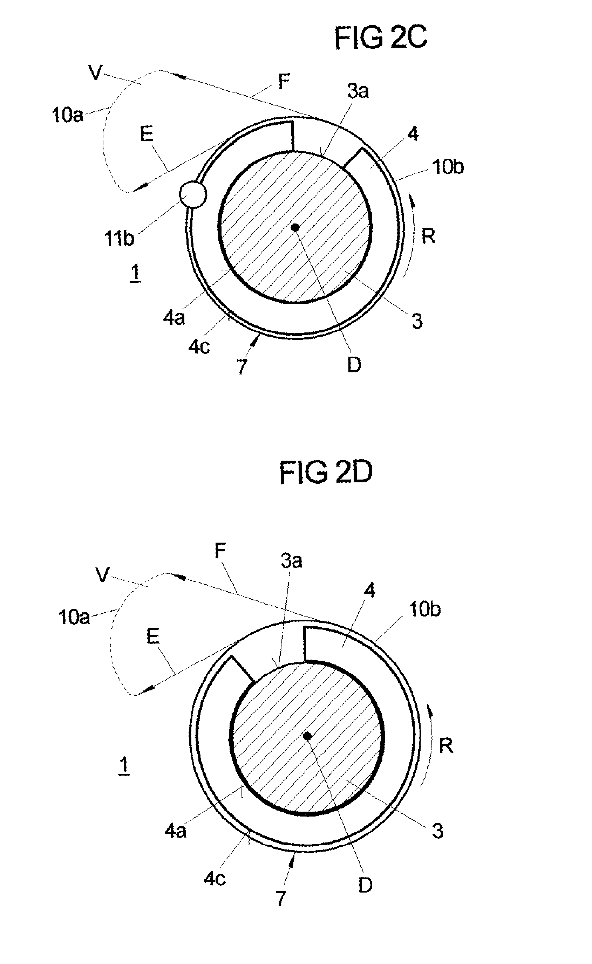

Figur 1 zeigt im Zusammenhang mit Figur 2 eine schematische, ausschnitthafte Schnittansicht eines Gurtstraffers 1 mit einer Gurtrolle (in der Figur 1 nicht gezeigt) zum Aufwickeln eines Sicherheitsgurtes eines Kraftfahrzeuges (in der Figur 1 nicht gezeigt), die mit einer Welleneinheit 2 verbunden ist, die sich aus einem an die Gurtrolle angegossenen Wellenkern 3 und einer auf den Wellenkern 3 aufgeschobenen Hülse 4 zusammensetzt.

Der Wellenkern 3 ist samt daran befestigter Gurtrolle um eine Drehachse D drehbar gelagert, wobei die Gurtrolle und der Wellenkern 3 zylindersymmetrisch zur Drehachse D ausgebildet sind. Zur drehbaren Lagerung der Gurtrolle über den zylinderförmig ausgebildeten, von der Gurtrolle entlang der Drehachse D abstehenden Wellenkern 3, ist sowohl ein Radiallager 5 vorgesehen, das in eine an einem freien Ende 3c des Wellenkerns 3 ausgebildete mit der Drehachse D fluchtende Ausnehmung 5a eingreift als auch ein Axiallager 6, das das freie Ende 3c des Wellenkerns 3 topfartig umgibt und in eine ringförmige Nut des Wellenkerns 3 eingreift, die den Wellenkern 3 an seinem freien Ende 3c quer zur Drehachse D umläuft.

Die den Wellenkern 3 umgreifende Hülse 4 ist entlang der ersten Richtung R offen ausgebildet, d.h., die Hülse 4 umläuft den Wellenkern 3 entlang der ersten Richtung R nicht vollständig und weist weiterhin einen Innendurchmesser derart auf, dass sich der Wellenkern 3 in der Hülse 4 um die Drehachse D drehen kann. D.h., der Innendurchmesser der Hülse 4 ist größer als der Außendurchmesser des Wellenkernes 3. Die Hülse 4 ist quer zur ersten Richtung R rückstellfähig ausgebildet, d.h., die Hülse 4 kann durch eine quer zur ersten Richtung R auf die Hülse 4 einwirkende Kraft derart deformiert werden, dass eine drehfeste Verbindung zwischen einer dem Wellenkern 3 zugewandten Innenseite 4a der Hülse 4 und einer äußeren entlang der Drehachse D verlaufenden Außenseite 3a des Wellenkernes 3 hergestellt wird. Die Hülse 4 weist zudem der äußeren Außenseite 3a des Wellenkernes 3 zugewandte rillenförmige innere Ausnehmungen 4b auf, so dass die Fläche, mit der die Innenseite 4a der Hülse 4 an der Außenseite 3a des Wellenkernes 3 anliegen kann, effektiv verkleinert ist. Hierdurch kann ein Anpressdruck, den die Hülse 4 auf den Wellenkern 3 ausübt, gesteigert werden.

Um die Hülse 4 ist ein streifenförmiges ausgebildetes längs erstrecktes Element 7 entlang einer die Hülse 4 und den Wellenkern 3 ringförmig umlaufenden Richtung R gewickelt, und zwar derart, dass es die Hülse 4 zumindest einmal, bevorzugt mehr als einmal vollständig entlang der ersten Richtung R umläuft.

Das längs erstreckte Element 7 ist samt Hülse 4 entlang der Drehachse D zwischen einer ersten und einer zweiten Gehäusewand 8, 9 des Gurtstraffers 1 angeordnet, wobei die erste Gehäusewand 8 und die zweite Gehäusewand 9 jeweils eine Ausnehmung 8a, 9a aufweisen, die einander entlang der Drehachse D gegenüber liegen und der Lagerung des Wellenkerns 3 dienen. In der Aussparung 8a der ersten Gehäusewand 8, die das freie Ende 3c des Wellenkerns 3 umgibt, ist das Axiallager 6 eingepasst, das das freie Ende 3c des Wellenkerns 3 topfartig umschließt. Demgegenüber weist die Aussparung 9a der zweiten Gehäusewand 9, die entlang der Drehachse D zwischen der Hülse 4 und dem nicht gezeigten Gurtaufroller angeordnet ist, eine der äußeren Außenseite 3a des Wellenkernes 3 zugewandte Innenseite 9a auf, die den Wellenkern 3 entlang der ersten Richtung R umläuft und eine Gleitfläche für den Wellenkern 3 ausbildet.

Das längs erstreckte Element 7 weist gemäß Figur 2 einen ersten Endabschnitt 7a und einen zweiten Endabschnitt 7b auf, die gemeinsam einen ersten Bereich 10b des längs erstreckten Elementes 7 bilden, wobei der erste und der zweite Endabschnitt 7a, 7b des längs erstreckten Elementes 7 über einen zweiten Bereich 10a des längs erstreckten Elementes 7 miteinander verbunden sind. Dieser zweite Bereich 10a bildet eine Schlaufe beliebiger Form, die von der Hülse 4 absteht und ein mit Druck beaufschlagbares Volumen V umgibt, welches durch den zweiten Bereich 10a des längs erstreckten Elementes 7 einerseits und die beiden senkrecht zur Drehachse D erstreckten Gehäusewände 8, 9 andererseits umschlossen wird.

Der erste Endabschnitt 7a und der zweite Endabschnitt 7b des längs erstreckten Elementes 7, die zusammen den ersten Bereich 10b des längs erstreckten Elementes 7 bilden, sind derart um die Hülse 4 gewickelt, dass sie quer zur ersten Richtung R im Wesentlichen deckungsgleich aufeinander zu liegen kommen, wobei der erste Endabschnitt 7a mit einem Teilabschnitt an einer dem Wellenkern 3 abgewandten Außenseite 4c der Hülse 4 anliegt. Der an der Außenseite 4c der Hülse 4 anliegende Teilabschnitt des ersten Abschnittes 7a des längs erstreckten Elementes 7 weist ein abgewinkeltes freies Ende 7c auf, welches zum Festlegen des ersten Abschnittes 7a des längs erstreckten Elementes 7 in eine Ausnehmung A1 einer Mehrzahl von Ausnehmungen A eingreift, die rillenförmig entlang der Drehachse D an der dem längs erstreckten Element 7 zugewandten Außenseite 4c der Hülse 4 ausgebildet sind. Damit auch der zweite Endabschnitt 7b des längs erstreckten Elementes 7 mit einem freien Ende 7d in eine zur Aussparung A1 benachbarte weitere Aussparung A2 eingreifen kann, überragt der zweite Endabschnitt 7b den ersten Endabschnitt 7a entlang der ersten Richtung R. Hierdurch kann das abgewinkelte freie Ende 7d des zweiten Endabschnittes 7b in die weitere Ausnehmung A2 eingreifen, wodurch der zweite Endabschnitte 7b des längs erstreckten Elementes 7 an der Hülse 4 festgelegt wird. Entscheidend bezüglich des Eingreifens der beiden freien Enden 7c, 7d in die Ausnehmungen A ist, dass die beiden freien Enden 7c, 7d nur durch eine quer zur ersten Richtung orientierte Bewegung außer Eingriff mit den Ausnehmungen A gebracht werden können.

Alternativ ist es möglich, die Ausnehmungen A als Durchgangsöffnungen auszubilden, die quer zur ersten Richtung R durch die Hülse 4 hindurch verlaufen. Somit können die freien Enden 7c, 7d des ersten und des zweiten Endabschnittes 7a, 7b durch jeweils eine solche Ausnehmung A hindurchgeführt werden und bei entsprechender Ausformung an der Innenseite 4a der Hülse 4 festgelegt werden.

Im Gefahrenfalle wird das Volumen V mit einem Druck beaufschlagt. Hierzu kann beispielsweise eine Bewegungserzeugungsvorrichtung in Form eines Gasgenerators ein Gas freisetzen, das in das Volumen V eingeleitet wird und eine Zugkraft auf den das Volumen umgebenden zweiten Bereich 10a des längs erstreckten Elementes 7 ausübt.

Der zweite Bereich 10a des längs erstreckten Elementes 7, d.h., derjenige Teil einer Wandung des Volumens V, der sich entlang der Drehachse D zwischen der ersten und der zweiten Gehäusewand 8, 9 des Gurtstraffers 1 befindet, ist derart angeordnet, dass die durch die Druckbeaufschlagung resultierende Zugkraft aus einer ersten Zugkraftkomponente F und einer zweiten Zugkraftkomponente E zusammengesetzt ist, wobei die beiden Zugkraftkomponenten E, F einen Winkel einschließen und entlang der ersten Richtung R tangential in den um die Hülse 4 gewickelten ersten Bereich 10b des längs erstreckten Elementes 7 eingeleitet werden.

Damit die durch die Bewegungserzeugungsvorrichtung bereitgestellte Zugkraft bzw. die beiden Zugkraftkomponenten E, F ein Abwickeln des ersten Bereiches 10a von der Hülse 4 zur Folge haben, und zwar derart, dass sich dabei der Wellenkern 3 und somit die Gurtrolle zum Straffen des Sicherheitsgurtes in der ersten Richtung R mitdrehen, muss vor dem Abwickeln des ersten Bereiches 10b des längs erstreckten Elementes 7 von der Hülse 4 eine hinreichend große Radialkraft den ersten Bereich 10b des längs erstreckten Elementes 7 quer zur ersten Richtung R gegen die Hülse 4 drücken, die daraufhin derart quer zur ersten Richtung R gegen den Wellenkern 3 gedrückt wird, dass eine drehfeste Verbindung zwischen dem erstem Bereich 10b und der Hülse 4 einerseits und der Hülse 4 und dem Wellenkern 3 andererseits geschaffen wird.

Dies wird erreicht, indem die Hülse 4 über ein erstes und ein zweites Verbindungselement 11a, 11 b mit den beiden Gehäusewänden 8, 9 des Gurtstraffers 1 verbunden wird, so dass sich die Hülse 4 aufgrund der in den ersten Bereich 10b eingeleiteten Zugkraftkomponenten E, F entlang der ersten Richtung R zunächst nicht drehen kann. Die beiden Verbindungselemente 11a, 11 b sind jeweils als Scherstifte ausgebildet, die entlang der Drehachse D von einander entlang der Drehachse D abgewandten Seiten der Hülse 4 abstehen und jeweils in entsprechende Aussparungen der ersten bzw. zweiten Gehäusewand 8, 9 eingreifen und somit verhindern, dass sich die Hülse 4 um die Drehachse D entlang der ersten Richtung R drehen kann.

Gegebenfalls können weitere, zusätzliche Verbindungselemente vorgesehen sein. Dies kann insbesondere bei der Herstellung des Gurtstraffers 1 von Vorteil sein, da mittels solcher zusätzlicher Verbindungselemente zwischen der Hülse 4 und einem nicht mit der Hülse 4 drehbaren Teil des Gurtstraffers 1 die Hülse 4 bei der Herstellung zusätzlich fixiert werden kann, wodurch die Montage des Gurtstraffers 1 erleichtert wird.

Figur 2a zeigt im Zusammenhang mit den Figuren 2b-d eine schematische Schnittansicht eines Gurtstraffers 1 der in der Figur 1 bzw. Figur 2 gezeigten Art, nachdem die Bewegungserzeugungsvorrichtung das Volumen V mit Druck beaufschlagt hat. Die beiden hierdurch erzeugten Zugkraftkomponenten E, F, die tangential in den um die Hülse 4 gewickelten ersten Bereich 10b des längs erstreckten Elementes 7 eingeleitet werden, bewirken aufgrund der durch die beiden Verbindungselemente 11a, 11 b gebildeten Verbindung zwischen der Hülse 4 und den beiden Gehäusewänden 8, 9 (das erste Verbindungselement 11a ist in der Figur 2a ebenso wie die beiden Gehäusewände 8, 9 nicht gezeigt) ein Drehmoment, das die Hülse 4 um eine parallel zur Drehachse D verlaufende Achse, die mit den beiden Verbindungselementen 11a, 11 b fluchtet, dreht, und zwar gleichsinnig mit der ersten Richtung R. Hierbei wird die Hülse 4 derart deformiert, dass sie sich an einem Bereich der äußeren Außenseite 3a des Wellenkernes 3 abstützt, d.h., die beiden Scherstifte 11a, 11b nehmen gemeinsam mit dem Wellenkern 3 die Gegenkräfte zu den beiden Zugkraftkomponenten E, F auf.

Die durch die beiden Zugkraftkomponenten E, F erzeugte Radialkraft, die quer zur ersten Richtung R orientiert ist und die Hülse 4 gemäß Figur 2b zusätzlich komprimiert, sorgt nun dafür, dass sich die Hülse 4 mit ihrer Innenseite 4a großflächig an die Außenseite 3a des Wellenkerns 3 anlegt.

Die Bewegungserzeugungsvorrichtung ist derart ausgelegt, dass die beiden Zugkraftkomponenten E, F betragsmäßig einen Schwellenwert übersteigen, der derart gewählt ist, dass die Verbindung zwischen der Hülse 4 und den beiden Gehäusewänden 8, 9 des Gurtstraffers 1 gelöst wird, d.h., die beiden Verbindungselemente 11a, 11 b werden quer zur Drehachse D tangential durch die Zugkraftkomponenten E, F sowie radial durch die von den Zugkraftkomponenten E, F bewirkte Radialkraft von der Hülse 4 abgeschert. Dieser Prozess des Abscherens ist kontinuierlich und endet mit dem kompletten Abscheren der beiden Verbindungselemente 11a, 11 b, die für gewöhnlich einen Durchmesser von ca. 1 bis 2 mm aufweisen. Dieser Abschervorgang ist schematisch in Figur 2c dargestellt.

Nach dem Abscheren der Scherstifte 11a, 11 b ist gemäß Figur 2d eine drehfeste Verbindung zwischen der Hülse 4 und dem Wellenkern 3 ausgebildet. Der Betrag der Radialkräfte, die das längs erstreckte Element 7 aufgrund der Zugkräfte E, F auf die Hülse 4 ausübt, hängt davon ab, wie oft der erste Bereich 10b des längs erstreckten Elementes 7 um den Wellenkern 3 gewickelt ist und wie groß die Reibung zwischen den aufeinander liegenden Abschnitte des längs erstreckten Elementes 7 ist.

Die quer zur ersten Richtung R wirksamen Radialkräfte sorgen dafür, dass der erste Bereich 10b des längs erstreckten Elementes 7 die Hülse 4 derart gegen den Wellenkern 3 drückt, dass das Abwickeln des ersten Bereiches 10b des längs erstreckten Elementes 7 durch die beiden Zugkraftkomponenten E, F dazu führt, dass sich der Wellenkern 3 in der ersten Richtung R mitdreht und somit der Sicherheitsgurt zum Straffen auf die drehfest mit dem Wellenkern 3 verbundene Gurtrolle aufgewickelt wird. Am Ende dieses Straffvorganges sind die beiden Zugkraftkomponenten E, F vom Betragen her Null und die Rückstellfähigkeit der Hülse 4 bewirkt, dass sich der Innendurchmesser der Hülse 4 aufweitet und den Wellenkern 3 freigibt, so dass sich dieser frei in der Hülse 4 um die Drehachse D drehen kann.

Bei entsprechender Auslegung der einzelnen Komponenten kann der Gurtstraffer 1 auch ohne Hülse 4 betrieben werden. In diesem Falle werden die beiden Scherstifte 11a, 11 b mit einem der beiden Endabschnitte 7a, 7b des ersten Bereiches 10b verbunden. Weiterhin ist eine Festlegung des ersten Bereiches 10b an der Hülse 4 nicht zwingend notwendig. Die durch die Zugkraftkomponenten E, F bereitgestellte Radialkraft (aufgrund der Verbindung zwischen der Hülse 4 bzw. dem ersten Bereich 10b des längs erstreckten Elementes 7 und den Gehäusewänden 8, 9) reicht aus, um zu erreichen, dass sich der Wellenkern 3 beim Abwickeln des längs erstreckten Elementes 7 von dem Wellenkern 3 in der ersten Richtung R mitdreht, sobald die Verbindung gelöst ist, d.h., die beiden Verbindungselemente 11 a, 11 b abgeschert sind.

## Patentansprüche

1. Gurtstraffer für ein Kraftfahrzeug, mit
- einer drehbar um eine Drehachse gelagerten Gurtrolle, die zum Aufwickeln eines Sicherheitsgurtes eines Kraftfahrzeuges dient,
- einer mit der Gurtrolle verbundenen, um deren Drehachse drehbaren Welleneinheit,
- einem längs erstreckten, flexiblen Element, das einen ersten Bereich aufweist, der um die Welleneinheit gewickelt ist, und einen von der Welleneinheit abstehenden zweiten Bereich aufweist, der mit dem ersten Bereich verbunden ist, und
- einer Bewegungserzeugungsvorrichtung, zum Bereitstellen einer Zugkraft, die zum Straffen des Sicherheitsgurtes an dem zweiten Bereich des längs erstreckten Elementes angreift, wobei das längs erstreckte Element derart mit der Welleneinheit zusammenwirkt, dass sich die Welleneinheit zum Straffen des Sicherheitsgurtes in einer ersten Richtung dreht, wenn der erste Bereich des längs erstreckten Elementes durch die am zweiten Bereich angreifende Zugkraft von der Welleneinheit abwickelt wird,
**dadurch gekennzeichnet,**
**dass** der erste Bereich (10b) des längs erstreckten Elementes (7) mit einem Teilabschnitt über eine durch Krafteinwirkung lösbare Verbindung derart an einem nicht gemeinsam mit der Welleneinheit (2) drehbaren Teil festgelegt ist, dass der erste Bereich (10b) des längs erstreckten Elementes (7) durch die am zweiten Bereich (10a) angreifende Zugkraft gegen die Welleneinheit (2) gedrückt wird, und
**dass** nach einem Lösen der Verbindung der erste Bereich (10b) des längs erstreckten Elementes (7) entlang der ersten Richtung (R) von der Welleneinheit (2) abwickelbar ist, wobei die Welleneinheit (2) zum Straffen des Sicherheitsgurtes entlang der ersten Richtung (R) gedreht wird.

2. Gurtstraffer nach Anspruch 1, **dadurch gekennzeichnet, dass** die Verbindung derart ausgebildet ist, dass sie durch die Zugkraft gelöst wird, wenn diese einen vorbestimmbaren Schwellenwert übersteigt.

3. Gurtstraffer nach Anspruch 2, **dadurch gekennzeichnet, dass** die Verbindung zumindest eine Sollbruchstelle aufweist, entlang der sie durchtrennbar ist.

4. Gurtstraffer nach einem der vorangegangenen Ansprüche, **dadurch gekennzeichnet, dass** der erste Bereich (10b) des längs erstreckten Elementes (7) durch die am zweiten Bereich (10a) angreifende Zugkraft quer zur ersten Richtung (R) gegen die Welleneinheit (2) gedrückt wird.

5. Gurtstraffer nach einem der vorangegangenen Ansprüche, **dadurch gekennzeichnet, dass** die Welleneinheit (2) einen entlang der Drehachse (D) erstreckten Wellenkern (3) und eine entlang der Drehachse (D) erstreckte Hülse (4) aufweist, die den Wellenkern (3) entlang der ersten Richtung (R) umgreift.

6. Gurtstraffer nach Anspruch 5, **dadurch gekennzeichnet, dass** die Hülse (4) drehbar auf dem Wellenkern (3) gelagert ist.

7. Gurtstraffer nach Anspruch 5 oder 6, **dadurch gekennzeichnet, dass** der Wellenkern (3) drehfest mit der Gurtrolle verbunden ist.

8. Gurtstraffer nach einem der Ansprüche 5 bis 7, **dadurch gekennzeichnet, dass** der Wellenkern (3) mit der Drehachse (D) fluchtet.

9. Gurtstraffer nach einem der Ansprüche 5 bis 8, **dadurch gekennzeichnet, dass** die Hülse (4) quer zur ersten Richtung (R) zwischen dem Wellenkern (3) und dem längs erstreckten Element (7) angeordnet ist.

10. Gurtstraffer nach einem der Ansprüche 5 bis 9, **dadurch gekennzeichnet, dass** das längs erstreckte Element (7) um die Hülse (4) gewickelt ist.

11. Gurtstraffer nach Anspruch 10, **dadurch gekennzeichnet, dass** die Hülse (4) der Welleneinheit (2) derart ausgebildet ist, dass sie drehfest mit dem Wellenkern (3) der Welleneinheit (2) in Eingriff tritt, wenn die durch die Bewegungserzeugungsvorrichtung bereitgestellte Zugkraft den ersten Bereich (10b) des längs erstreckten Elementes (7) gegen die Hülse (4) der Welleneinheit (2) drückt.

12. Gurtstraffer nach Anspruch 4, **dadurch gekennzeichnet, dass** die Welleneinheit (2) ein einteiliges mit der Drehachse (D) fluchtendes Wellenelement ist, das drehfest mit der Gurtrolle verbunden ist.

13. Gurtstraffer nach Anspruch 12, **dadurch gekennzeichnet, dass** das längs erstreckte Element (7) um das Wellenelement gewickelt ist.

14. Gurtstraffer nach Anspruch 13, **dadurch gekennzeichnet, dass** das längs erstreckte Element (7) derart ausgebildet ist, dass es drehfest mit dem einteiligen Wellenelement in Eingriff tritt, wenn die durch die Bewegungserzeugungsvorrichtung bereitgestellte Zugkraft am ersten Bereich (10b) des längs erstreckten Elementes (7) angreift.

15. Gurtstraffer nach einem der Ansprüche 5 bis 11, **dadurch gekennzeichnet, dass** die Hülse (4) einen entlang der Drehachse (D) verlaufenden Schlitz aufweist.

16. Gurtstraffer nach Anspruch 5 oder einem der Ansprüche 6 bis 15 soweit rückbezogen auf Anspruch 5, **dadurch gekennzeichnet, dass** die Verbindung durch zumindest ein Verbindungselement (11a) gebildet ist, welches an der Hülse (4) der Welleneinheit (2) befestigt ist und diese mit dem nicht mit der Welleneinheit (2) drehbaren Teil des Gurtstraffers (1) verbindet.

17. Gurtstraffer nach Anspruch 16, **dadurch gekennzeichnet, dass** das zumindest eine Verbindungselement (11a) einstückig an die Hülse (4) der Welleneinheit (2) angeformt ist.

18. Gurtstraffer nach einem der Ansprüche 1 bis 15, **dadurch gekennzeichnet, dass** die Verbindung durch zumindest ein Verbindungselement (11a) gebildet ist, das am ersten Bereich (10b) befestigt ist und diesen mit dem nicht mit der Welleneinheit (2) drehbaren Teil des Gurtstraffers (1) verbindet.

19. Gurtstraffer nach Anspruch 18, **dadurch gekennzeichnet, dass** das zumindest eine Verbindungselement (11a) einstückig an den ersten Bereich (10b) des längs erstreckten Elementes (7) angeformt ist.

20. Gurtstraffer nach einem der Ansprüche 16 bis 19, **dadurch gekennzeichnet, dass** die Verbindung durch ein weiteres Verbindungselement (11b) gebildet wird.

21. Gurtstraffer nach Anspruch 20, **dadurch gekennzeichnet**, das das weitere Verbindungselement (11 b) mit dem zumindest einem Verbindungselement (11a) fluchtet.

22. Gurtstraffer nach einem der vorangegangenen Ansprüche, **dadurch gekennzeichnet, dass** der zweite Bereich (10a) des längs erstreckten Elementes (7) als eine Schlaufe beliebiger Form ausgebildet ist.

23. Gurtstraffer nach Anspruch 22, **dadurch gekennzeichnet, dass** der erste Bereich (10b) des längs erstreckten Elementes (7) durch einen ersten Endabschnitt (7a) und einen zweiten Endabschnitt (7b) des längs erstreckten Elementes (7) gebildet ist, wobei die beiden Endabschnitte (7a, 7b) über den zweiten Bereich (10a) miteinander verbunden sind.

24. Gurtstraffer nach Anspruch 23, **dadurch gekennzeichnet, dass** der erste Bereich (10b) derart um die Welleneinheit (2) gewickelt ist, dass sowohl der erste als auch der zweite Endabschnitt (7a, 7b) die Welleneinheit (2) zumindest zweimal umlaufen.

25. Gurtstraffer nach einem der vorangegangenen Ansprüche, **dadurch gekennzeichnet, dass** der erste und der zweite Bereich (10a) einstückig miteinander verbunden sind.

26. Gurtstraffer nach Anspruch 5 oder einem der Ansprüche 6 bis 25 soweit rückbezogen auf Anspruch 5, **dadurch gekennzeichnet, dass** der erste Bereich (10b) an der Hülse (4) festlegbar ist.

27. Gurtstraffer nach Anspruch 26, **dadurch gekennzeichnet, dass** die Hülse (4) zum Festlegen des ersten Bereiches (10b) an der Hülse (4) zumindest eine dem Wellenkern (3) abgewandte Ausnehmung (A) aufweist.

28. Gurtstraffer nach Anspruch 27, **dadurch gekennzeichnet, dass** der erste Bereich (10b) zum Festlegen des ersten Bereichs (10b) an der Hülse (4) mit zumindest einem freien Ende (7c) des ersten Bereichs (7a) in die zumindest eine Ausnehmung (A) der Hülse (4) eingreift.

29. Gurtstraffer nach einem der vorangegangenen Ansprüche, **dadurch gekennzeichnet, dass** das längs erstreckte Element (7) streifenförmig ausgebildet ist.

30. Gurtstraffer nach einem der vorangegangenen Ansprüche, **dadurch gekennzeichnet, dass** das längs erstreckte Element (7) aus einem Metall besteht.

31. Gurtstraffer nach einem der vorangegangenen Ansprüche, **dadurch gekennzeichnet, dass** der zweite Bereich (10a) des längs erstreckten Elementes (7) ein mit Druck beaufschlagbares Volumen (V) derart umgibt, dass ein Beaufschlagen des Volumens (V) mit Druck mittels der Bewegungserzeugungsvorrichtung die Zugkraft erzeugt, die den ersten Bereich (10b) von der Welleneinheit (2) abwickelt.

32. Gurtstraffer nach einem der vorangegangenen Ansprüche, **dadurch gekennzeichnet, dass** der Gurtstraffer (1) eine erste und eine zweite quer zur Drehachse (D) erstrecke Gehäusewand (8, 9) aufweist, wobei die beiden Gehäusewände (8, 9) entlang der Drehachse (D) einander gegenüberliegen.

33. Gurtstraffer nach Anspruch 31 und 32, **dadurch gekennzeichnet, dass** die beiden Gehäusewände (8, 9) zusammen mit dem zweiten Bereich (10a) des längs erstreckten Elementes (7) das mit Druck beaufschlagbare Volumen (V) ausbilden.

34. Gurtstraffer nach einem der Ansprüche 1 bis 31 und Anspruch 32 oder 33, **dadurch gekennzeichnet, dass** der nicht gemeinsam mit der Welleneinheit (2) drehbare Teil des Gurtstraffers (1) durch die erste und / oder zweite Gehäusewand (8, 9) gebildet ist.
